# EUROPÄISCHE PATENTANMELDUNG

(11) **EP 0 872 458 A1**
(43) Veröffentlichungstag der Anmeldung: **21.10.1998**
(21) Anmeldenummer: 97106514.9
(22) Anmeldetag: 19.04.1997
(51) Int. Cl.: C03C 13/00

(54) **Mineralfaserzusammensetzung**

(71) Anmelder: Grünzweig + Hartmann AG, D-67059 Ludwigshafen (DE)
(72) Erfinder: Holstein, Wolfgang, Dr., 35315 Homberg (DE); Lohe, Peter, 67112 Mutterstadt (DE); Katzschmann, Axel, Dr., 68723 Schwetzingen (DE); Schwab, Wolfgang, 68723 Planckstadt (DE)
(74) Vertreter: Herrmann-Trentepohl, Werner, Dipl.-Ing.

(57) **Zusammenfassung**

Die Erfindung betrifft eine biologisch abbaubare Mineralfaserzusammensetzung mit den folgenden Bestandteilen in Gewichtsprozent:

| | |
|---|---|
| SiO₂ | 51,5 bis 57,0 |
| Al₂O₃ | ≤ 2,0 |
| Fe₂O₃ | ≤ 1,0 |
| CaO | 28,0 bis 33,0 |
| MgO | 8,0 bis 11,0 |
| Na₂O | 2,4 bis 4,4 |
| K₂O | ≤ 2,0 |

wobei das Gewichtsverhältnis SiO₂/(Na₂O + K₂O) im Bereich von 12,8 bis 15,0 und die Viskosität log η [dPas] von 1,25 bei einer Temperatur von 1340 bis 1350°C oder mehr liegt und die Summe der Gewichtsanteile der Oxide von Natrium, Kalium, Bor, Calcium, Magnesium und Barium, abzüglich des doppelten Gewichtsanteils an Aluminiumoxid (KI-Index) im Bereich von 40 bis 42 liegt.

## Beschreibung

Die Erfindung betrifft eine biologisch abbaubare Mineralfaserzusammensetzung sowie Mineralwolleprodukte, die Mineralfasern mit einer solchen Zusammensetzung enthalten..

Mineralfasern, die unter physiologischen Bedingungen biologisch abgebaut werden können, sind im Stande der Technik vielfach beschrieben.

Die biologische Abbaubarkeit von Mineralfaserzusammensetzungen ist insofern von großer Bedeutung, weil verschiedene Untersuchungen darauf hinweisen, daß Mineralfasern sehr kleiner Dimensionen, insbesondere solche einer Länge von mehr als 5 µm und eines Durchmessers von weniger als 3 µm und einem Länge-zu-Durchmesser-Verhältnis von mehr als 3:1 im Verdacht stehen, kanzerogen zu sein, wenn sie in den Körper gelangen und dort dauerhaft oder über längere Zeit verbleiben. Es wurde ferner durch Untersuchungen belegt, daß Mineralfasern, die den oben genannten Kriterien genügen, aber unter physiologischen Bedingungen abgebaut werden, beispielsweise mit einer Halbwertzeit im Bereich von 40 Tagen, keine Kanzerogenität zeigen.

Es hat sich deshalb in jüngster Zeit ein Trend hin zu Mineralfaserzusammensetzungen mit guter biologischer Abbaubarkeit ergeben.

Die Kanzerogenität von Faserstäuben natürlicher und künstlicher Mineralfasern wird nach der TRGS 905 des BMA in der Fassung vom Oktober 1995 u. a. anhand der Zusammensetzung bestimmt. Für sogenannte WHO-Fasern einer Länge > 5 µm, eines Durchmessers < 3 µm und eines Länge-zu-Durchmesser-Verhältnisses von > 3:1 aus Glas, Stein, Schlacke oder Keramik gilt eine Einteilung in einzelne Kategorien, wobei die Bewertung anhand des sogenannten Kanzerogenitätsindex KI vorgenommen wird. Ausschlaggebend für die Einteilung ist die Summe der Massegehalte (in Gewichtsprozent) der Oxide von Natrium, Kalium, Bor, Calcium, Magnesium, Barium vermindert um den doppelten Massengehalt von Aluminiumoxid nach der Formel KI=Σ Na, K, B, Ca, Mg, Ba-Oxide - 2 x Al-Oxid.

Im Ergebnis werden glasige WHO-Fasern mit einem Kanzerogenitätsindex KI ≤ 30 in die Katergorie 2 eingestuft, solche mit KI > 30 und < 40 in die Katergorie 3, während bei solchen mit einem KI > 40 keine Einstufung als krebserzeugend erfolgt.

Entsprechend gelten Mineralfaserzusammensetzungen mit einem KI gemäß vorstehender Definition von 40 oder mehr als nicht kanzerogen.

Wie ausgeführt, wird der KI-Wert vor allem durch die als sogenannte Flußmittel zugesetzten Alkali-, Erdalkali- und ggfs. Boroxide positiv beeinflußt, während das als Netzwerkbildner zugesetzte Aluminiumoxid mit seinem doppelten Gewichtsanteil negativ berücksichtigt wird. Andere Bestandteile, wie SiO₂ selbst und Fe₂O₃, sind berechnungsneutral.

Die Einstellung eines KI-Wertes von 40 oder mehr ist aus mehreren Gründen problematisch. Abgesehen davon, daß eine solche Zusammensetzung zu wirtschaftlich vernünftigen Konditionen realisierbar sein muß, müssen diese Zusammensetzungen gut verarbeitbar sein und die daraus hergestellten Produkte den technischen Anforderungen genügen. Ein hoher KI-Wert erfordert aber den Einsatz erheblicher Mengen an Flußmitteln, was die Eigenschaften der Glasschmelze stark beeinflußt.

Mineralfaserzusammensetzungen sollen den Anforderungen an eine gute Verarbeitbarkeit nach etablierten Verfahren zur Herstellung von Mineralwolle genügen, insbesondere nach dem Düsenblas- oder Sillanverfahren mit Kleinen Durchmessern. Verlangt wird ein ausreichendes Verabeitungsfenster oberhalb der Liquidustemperatur, beispielsweise ein Fenster von 80°C und eine geeignete Viskosität der Glasschmelze, die einerseits einen genügend hohen Durchsatz erlaubt und andererseits eine Zerfaserbarkeit mit guter Wollequalität mit sich bringt.

Die mechanischen und thermischen Eigenschaften der Mineralfasern bzw. der daraus hergestellten Produkte sind gleichfalls von großer Bedeutung. Mineralwolle wird beispielsweise in großem Umfang zu Dämmzwecken eingesetzt, weshalb, insbesondere für die Verwendung im Industriesektor, eine ausreichende Form- und Temperaturbeständigkeit notwendig ist. Verlangt wird ferner Beständigkeit gegen Witterungseinflüsse, um eine lange Lebensdauer der Produkte zu gewährleisten.

Was die Verarbeitbarkeit der Mineralfaserzusammensetzungen anbetrifft, ist es beispielsweise für die Durchführung des Düsenblasverfahrens wesentlich, daß die verarbeitete Rohschmelze eine geeignete Viskosität aufweist, die es erlaubt, nicht zu dünne Primär-Fäden aus flüssigem Glas zu erzeugen, die anschließend durch die Wirkung ausziehender Gasströme zerfasert werden. Bei einer vorgegebenen Stärke der Primär-Glasfäden führt eine zu hohe Viskosität zu einem zu geringen Durchsatz und eine zu geringe Viskosität zu einem zu schnellen Ablaufen der Glaschmelze mit weiteren, negativen Auswirkungen auf den Zerfaserungsvorgang selbst. Eine Verringerung der Stärke der Primär-Glasfäden wiederum vermindert den Durchsatz und hat Rückwirkungen auf den Zerfaserungsvorgang.

Eine weitere Voraussetzung für eine gute Verarbeitbarkeit ist eine hinreichender Abstand der Liquidustemperatur von der Temperatur, bei der die für die Verarbeitung gewünschte Viskosität vorliegt. Ein ausreichender Temperaturabstand gewährleistet eine hinreichend große Flexibilität der Produktionsbedingungen, insbesondere was die Temperatursteuerung anbetrifft, und erlaubt es auch, kleinere Abweichungen in der Zusammensetzung der Schmelze von der Richtzusammensetzung abzupuffern.

Biologisch abbaubare Mineralfaserzusammensetzungen sind aus der DE 44 27 368 A1 bekannt. Die daraus und im Zusammenhang damit bekannt gewordenen Glasanalysen ergeben zwar für die verschiedensten Zwecke geeignete Mineralfasern, beruhen aber auf einem Kompromiß, der zu Lasten der Zerfaserung geht. Gute Produkteigenschaften werden erkauft mit Einbußen bei der Herstellungsleistung, die sich auf die Wirtschaftlichkeit des Produktes negativ auswirken. Insbesondere weisen diese Glasmischungen eine relativ niedrige Temperatur für den Viskositätkennwert log η von 1,25 auf, der zu dem sehr dicht bei der Liquidustemperatur liegt. Hierdurch ergibt sich ein sehr Kleines Verarbeitungsfenster bzw. die Notwendigkeit, die Verarbeitung bei erhöhten Temperaturen und damit deutlich niedrigerer Viskosität durchzuführen. Die erniedrigte Arbeitsviskosität führt zu einer Verminderung des Primärfadendurchmessers, was wiederum einen Durchsatz unterhalb des Anlagenoptimums mit sich bringt.

Der Erfindung liegt daher die Aufgabe zugrunde, eine Mineralfaserzusammensetzung zu schaffen, die sich durch biologische Abbaubarkeit auszeichnet, eine wirtschaftliche Zerfaserbarkeit aufweist und die gewohnte Qualität der Mineralfaserprodukte beibehält. Eine gute wirtschaftliche Zerfaserbarkeit verlangt insbesondere einen hinreichenden Abstand der Temperatur, bei der die Glasviskosität η einen Wert von ca. 18 dPas (log η = 1,25) hat, von der Liquidustemperatur, eine optimale Stärke der Primärfäden und damit eine verbesserte Produktivität der Gesamtanlage. Ferner sollen die Mineralwolleprodukte eine Temperaturbeständigkeit aufweisen, die ihren Einsatz in für Steinwolle üblichen technischen Anwendungsbereichen möglich macht.

Es wurde nun gefunden, daß diese Aufgabe überraschend durch eine Mineralfaserzusammensetzung gelöst werden kann, die im wesentlichen aus Siliciumdioxid und Erdalkalioxiden besteht, einen relativ geringen Anteil an Aluminiumoxid aufweist und hinsichtlich ihres Gehalts an Natrium- und Kaliumoxid definiert ist.

Die erfindungsgemäß erhaltenen Mineralfasern zeigen biologische Abbaubarkeit nach den Kriterien der TRGS 905, eine ausreichende Temperaturbeständigkeit für Dämmobjekte wie auch Witterungsbeständigkeit und können nach dem bekannten Sillan-Verfahren bei einer Bearbeitungstemperatur im Bereich von 1300 bis 1400°C mit gegenüber bekannten Zusammensetzungen erhöhtem Durchsatz hergestellt werden.

Die erfindungsgemäßen Mineralfaserzusammensetzungen weisen die folgenden Bestandteile in Gewichtsprozent auf:

| | |
|---|---|
| SiO₂ | 51,5 bis 57,0 |
| Al₂O₃ | ≤ 2,0 |
| Fe₂O₃ | ≤ 1,0 |
| CaO | 28,0 bis 33,0 |
| MgO | 8,0 bis 11,0 |
| Na₂O | 2,4 bis 4,4 |
| K₂O | ≤ 2,0 |

wobei das Gewichtverhältnis SiO₂/(Na₂O + K₂O) im Bereich von 12,8 bis 15,0 liegt und die Summe der Gewichtsanteile der Oxide von Natrium, Kalium, Bor, Calcium, Magnesium und Barium, abzüglich des doppelten Gewichtsanteils an Aluminiumoxid (KI-Index) im Bereich von 40 bis 42 liegt.

Weitere Bestandteile, wie P₂O₅, TiO₂, BaO, MnO oder dergleichen, wie sie üblicherweise in geringen Mengen in Mineralfaserzusammensetzungen verwandt werden, können in einzelnen Teilen oder als Summe in Mengen von bis zu 5 Gew.-% zugegen sein.

Die erfindungsgemäße Mineralfaserzusammensetzung, die bei einem geringen Gehalt an Aluminiumoxid einen KI-Wert von 40 bis 42 aufweist, zeichnet sich durch einen vergleichsweise hohen Anteil an SiO₂ und einen darauf abgestimmten, relativ niedrigen Anteil an Alkalioxiden (Na₂O + K₂O) aus. Das Gewichtsverhältnis SiO₂/(Na₂O + K₂O) von 12,8 bis 15,0 entspricht Anteilen 3,4 bis 4,5 Gewichtsprozent Na₂O + K₂O in der Zusammensetzung. Durch diese Kombination wird eine günstige Liquidustemperatur, eine für Zerfaserungsleistung geeignete Viskosität und ein sicherer Abstand der Temperatur der Kennviskosität von der Liquidustemperatur gewährleistet. Die damit hergestellten Mineralfasern erreichen eine hinreichende Temperaturbeständigkeit von ca. 700°C.

Besonders bevorzugt sind Mineralfaserzusammensetzungen mit den folgenden Bestandteilen in Gewichtsprozent:

| | |
|---|---|
| SiO₂ | 53,0 bis 56,0 |
| Al₂O₃ | 1,0 bis 1,8 |
| Fe₂O₃ | 0,6 bis 1,0 |
| CaO | 28,0 bis 30,0 |
| MgO | 8,0 bis 11,0 |
| Na₂O | 3,5 bis 4,2 |
| K₂O | ≤ 0,5. |

Die erfindungsgemäßen Mineralfaserzusammensetzungen beruhen auf der Erkenntnis, daß durch einen kontrollierten Zusatz von Alkalioxiden sowohl die Liquidustemperatur als auch die Viskositätskenndaten in für die Verarbeitbarkeit der Zusammensetzung positivem Sinne beeinflußt werden können, ohne daß dabei andere Eigenschaften, wie beispielsweise die biologische Abbaubarkeit, beeinträchtigt werden.

Bevorzugt ist ein Gewichtsverhältnis SiO₂/(Na₂O + K₂O) im Bereich von 12,8 bis 13,5 und insbesondere ein solches von 12,9 bis 13,0, entsprechend 3,9 bis 4,4 Gewichtsprozent Na₂O + K₂O bzw. 4,1 bis 4,3 Gewichtsprozent Na₂O + K₂O.

Die erfindungsgemäßen Mineralfaserzusammensetzungen haben eine Liquidustemperatur von 1310°C. Die Temperatur bei einem Viskositätskennwert log η [dPas] von 1,25 liegt vorzugsweise höher als 1340°C, insbesondere bei etwa 1345°C oder höher.

Die erfindungsgemäßen Zusammensetzungen führen zu einer Absenkung des Aluminiumoxidgehaltes gegenüber herkömmlichen Mischungen, insbesondere auf Werte unter 2,0 Gewichtsprozent, was auch den KI-Wert positiv beeinflußt. Wesentlich ist dabei, daß mit den aus diesen Zusammensetzungen gewonnenen Fasern bzw. die Dämmstoffe darau die gewünschten Eigenschaften, insbesondere die Temperaturbeständigkeit, erreicht worden.

Insgesamt kommt es bei der Erfindung auf eine sorgfältige Abstimmung der einzelnen Komponenten an, um die erfindungsgemäßen Ziele zu erreichen. Der relativ hoch angesetzte Gehalt an SiO₂ bringt Temperaturbeständigkeit mit sich und beeinflußt die Viskosität im gewünschten Sinne. Die Abstimmung der Alkali- und Erdalkalizuschläge erreicht, daß sich ingesamt eine überraschend niedrige Liquidustemperatur ergibt.

Die erfindungsgemäßen Mineralfaserzusammensetzungen können in üblichen Schmelzwannen bei Schmelztemperaturen von 1380 bis 1450°C geschmolzen werden. Dabei wird eine homogene Schmelze erhalten, was Voraussetzung für eine kontinuierliche Produktion und gleichbleibende Produktqualität sowie einen gleichmäßigen Produktionsprozeß ist. Die Homogenität der Glaschmelze gewährleistet die Reproduzierbarkeit des Zerfaserungsprozesses und führt zu konstant guten thermischen und mechanischen Produkteigenschaften.

Die erfindungsgemäßen Mineralfaserzusammensetzungen werden in üblicher Weise zu Mineralwolleprodukten, wie Dämmatten und Formkörper, verarbeitet.

Die Erfindung wird durch die nachfolgenden Beispiele näher erläutert.

### Beispiel 1

Nach dem Sillan-Verfahren wurde eine Mineralwolle mit der nachstehend genannten erfindungsgemäßen Zusammensetzung in Gewichtsprozent produziert:

| | |
|---|---|
| SiO₂ | 54,3 |
| Al₂O₃ | 1,6 |
| Fe₂O₃ | 0,8 |
| CaO | 29,6 |
| MgO | 9,5 |
| Na₂O | 3,9 |
| K₂O | 0,3. |

Die Zusammensetzung steht für ein KI-Wert von 40,1. Das Verhältnis SiO₂/(Na₂O + K₂O)beträgt 12,93.

Die Zusammensetzung wurde bei einer Temperatur von ca. 1430°C zu einer homogenen Schmelze aufgeschmolzen. Die Liquidustemperatur liegt bei 1315°C. Der Viskositätskennwert log η von 1,25 wird bei einer Temperatur von 1345°C erreicht. Das Schmelzgut wurde durch Platindüsen mit einem um ca. 15 % vergrößerten Bohrungsdurchmesser geführt und die Primärfaden aus geschmolzenem Glas in einem Hochgeschwindigkeits-Luftstrom zu Fasern mit einem mittleren Durchmesser im Bereich von 2,0 bis 10 µm zerfasert. Die auf einen Bohrungsdurchmesser bezogene Leistung betrug ca. 32 kg/Tag.

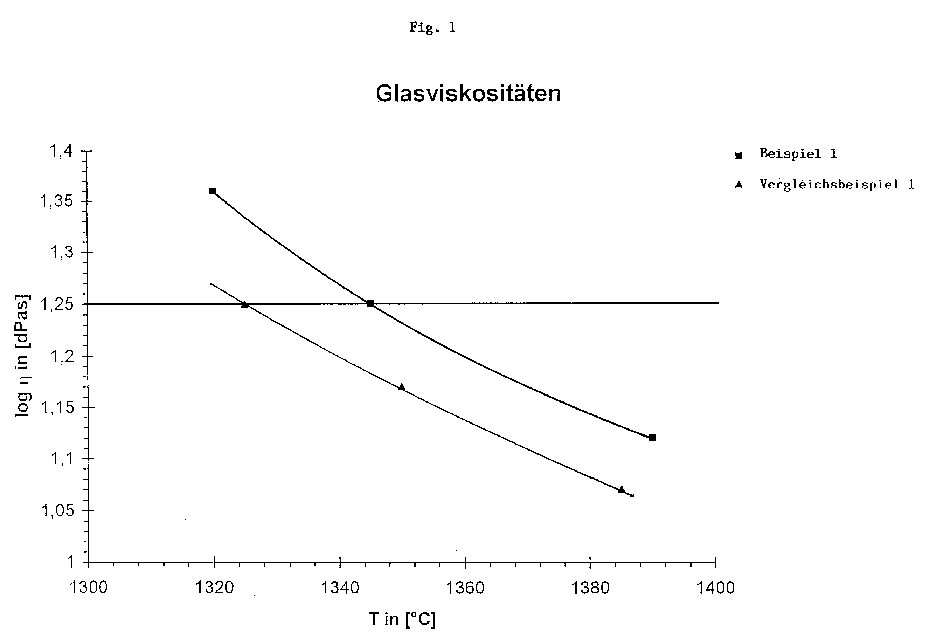

Die Viskosität der Glasschmelze ist in Abhängigkeit von der Temperatur in Fig. 1 dargestellt.

### Vergleichsbeispiel 1

Entsprechend zu Beispiel 1 wurde eine Mineralfaserzusammensetzung gemäß DE 44 27 368 mit den folgenden Bestandteilen zu Glaswolle verarbeitet:

| | |
|---|---|
| SiO₂ | 50,7 |
| Al₂O₃ | 2,5 |
| Fe₂O₃ | 1,0 |
| CaO | 30,8 |
| MgO | 11,0 |
| Na₂O | 3,4 |
| K₂O | 0,6. |

Der KI-Wert der Zusammensetzung beträgt 40,8, das Verhältnis SiO₂/(Na₂O + K₂O) 12,68. Die Liquidustemperatur der homogenen Schmelze liegt bei einer Temperatur von etwa 1320°C, der Viskositätswert log η von 1,25 wird bei einer Temperatur von 1325°C erreicht.

Eine Verarbeitung dieser Schmelze war nur aus Platindüsen mit einem Durchmesser von maximal 1,1 mm möglich, wogegen erfindungsgemäß nunmehr 1,3 mm möglich sind. Bei dem Vergleichsbeispiel lag die auf den Bohrungsdurchmesser bezogene Leistung bei ca 27 kg/Tag..

Die Viskosität der Glasschmelze in Abhängigkeit von der Temperatur ist in Fig. 1 zum Vergleich aufgetragen.

Ein Vergleich der beiden Beispiele zeigt, daß die dort eingesetzten Glasschmelzen nahezu parallel verlaufende Viskositätskurven aufweisen, wobei die der erfindungemäßen Schmelze die Kennlinie log η [dPas] von 1,25 bei einer um 20°C erhöhten Temperatur schneidet. Da gleichzeitig die Liquidustemperatur unterhalb derjenigen der Schmelze des Vergleichsbeispiels liegt, öffnet sich ein Verarbeitungsfenster oberhalb der Liquidustemperatur, das sehr günstig zur Kennviskosität gelegen ist. Der relativ große Abstand zur Liquidustemperatur gibt die Möglichkeit einer Feinjustierung sowohl hinsichtlich der Temperatur der Glasfäden als auch hinsichtlich der Viskosität und erlaubt dabei auch, Kleinere Schwankungen in der Zusammensetzung der Glasschmelze aufzufangen.

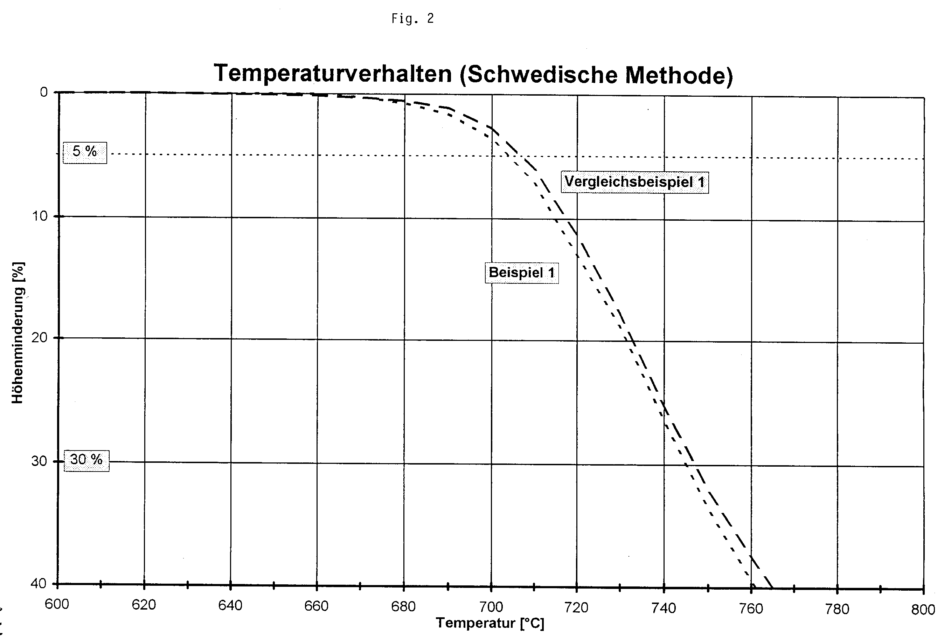

Insgesamt ermöglicht die Erfindung eine Erhöhung der Tagesproduktion der gleichen Anlage um ca. 15 %. Dabei bleiben die wesentlichen Eigenschaften der hiermit hergestellten Mineralwolledämmstoffe wie z. B. die Anwendungstemperatur nahezu unverändert, was in Fig. 2 dargestellt wird.

Hierbei wurde das Temperaturverhalten der Mineralfasern mit der sogenannten 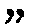 Schwedischen Methode" ermittelt. Bei dieser Methode wird ein Silitrohrofen mit liegendem, beidseitig offenem Arbeitsrohr mit einer Länge von 350 mm und einem Innendurchmesser von 27 mm verwendet. Im Ofenzentrum ist ein keramisches Auflageplättchen mit 30 x 20 x 3 mm zum Aufstellen des Prüfkörpers. Der Prüfkörper hat Abmessungen von 12 x 12 x 12 mm oder 12 mm ⌀ x 12 mm Höhe. Die Rohrdichte beträgt im Normalfall 100 kg/m³. Die Temperatursteigerung beträgt 5 K/min. Die Ermittlung der Prüfkörperhöhenänderung erfolgt laufend mit einer Ableseoptik.

Die Ermittlung des Temperaturverhaltens gemäß der 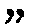 Schwedischen Methode" ergab eine Temperaturbeständigkeit bei 5 % Höhenminderung von rund 705°C, was aus dem in Fig. 2 dargestellten Schaubild deutlich zu erkennen ist.

## Patentansprüche

1. Biologisch abbaubare Mineralfaserzusammensetzung, gekennzeichnet durch die folgenden Bestandteile in Gewichtsprozent:
| | |
|---|---|
| SiO₂ | 51,5 bis 57,0 |
| Al₂O₃ | ≤ 2,0 |
| Fe₂O₃ | ≤ 1,0 |
| CaO | 28,0 bis 33,0 |
| MgO | 8,0 bis 11,0 |
| Na₂O | 2,4 bis 4,4 |
| K₂O | ≤ 2,0 |
wobei das Gewichtverhältnis SiO₂/(Na₂O + K₂O) im Bereich von 12,8 bis 15,0 und die Viskosität log η [dPas] von 1,25 bei einer Temperatur von 1340 bis 1350°C oder mehr liegt und die Summe der Gewichtsanteile der Oxide von Natrium, Kalium, Bor, Calcium, Magnesium und Barium, abzüglich des doppelten Gewichtsanteils an Aluminiumoxid (KI-Index) im Bereich von 40 bis 42 liegt.

2. Mineralfaserzusammensetzung nach Anspruch 1, dadurch gekennzeichnet, daß das Verhaltnis SiO₂/(Na₂O + K₂O) im Bereich von 12,8 bis 13,5 liegt.

3. Mineralfaserzusammensetzung nach einem der vorstehenden Ansprüche, gekennzeichnet durch eine Liquidustemperatur von 1310 bis 1320°C.

4. Mineralfaserzusammensetzung nach einem der vorstehenden Ansprüche der folgenden Zusammensetzung in Gewichtsprozent:
| | |
|---|---|
| SiO₂ | 53,0 bis 56,0 |
| Al₂O₃ | 1,0 bis 1,8 |
| Fe₂O₃ | 0,6 bis 1,0 |
| CaO | 28,0 bis 30,0 |
| MgO | 9,0 bis 10,0 |
| Na₂O | 3,5 bis 4,2 |
| K₂O | ≤ 0,5. |

5. Mineralwolleprodukt, enthaltend Mineralfasern mit einer Zusammensetzung nach einem der vorstehenden Ansprüche.
